# EUROPÄISCHE PATENTSCHRIFT

(11) **EP 0 986 600 B1**
(45) Veröffentlichungstag und Bekanntmachung des Hinweises auf die Patenterteilung: **17.10.2001**
(21) Anmeldenummer: 98937435.0
(22) Anmeldetag: 02.06.1998
(51) Int. Cl.: C08J 3/28, C08J 3/02

(54) **VERFAHREN ZUR HERSTELLUNG VON LÖSUNGEN MIT SÄUREGRUPPEN FUNKTIONALISIERTER POLYMERE DURCH MIKROWELLENBESTRAHLUNG**
METHOD FOR PRODUCING SOLUTIONS OF POLYMERS FUNCTIONALIZED BY ACID GROUPS BY MICROWAVE RADIATION
PROCEDE DE FABRICATION DE SOLUTIONS DE POLYMERES FONCTIONNALISES PAR DES GROUPES ACIDES PAR RAYONNEMENT MICRO-ONDES

(30) Priorität: 06.06.1997 DE 19723854
(43) Veröffentlichungstag der Anmeldung: 22.03.2000
(73) Patentinhaber: Celanese Ventures GmbH, 65926 Frankfurt am Main (DE)
(72) Erfinder: SOCZKA-GUTH, Thomas, D-65719 Hofheim (DE); WITTELER, Helmut, D-67259 Beindersheim (DE); DECKERS, Gregor, D-65929 Frankfurt am Main (DE); FRANK, Georg, D-72074 Tübingen (DE); BREHL, Kilian, D-60437 Frankfurt am Main (DE); LENZE, Jürgen, D-65929 Frankfurt am Main (DE); BÖNSEL, Harald, D-65529 Waldems (DE); KNAUF, Rüdiger, D-65719 Hofheim (DE)
(86) Internationale Anmeldenummer: EP9803263
(87) Internationale Veröffentlichungsnummer: WO9855534

(56) Entgegenhaltungen:
- EP-A- 0 465 858
- DE-A- 4 327 805
- PATENT ABSTRACTS OF JAPAN vol. 015, no. 461 (C-0887), 22. November 1991 & JP 03 196834 A (ASAHI OPTICAL CO LTD), 28. August 1991
- DATABASE WPI Section Ch, Week 9049 Derwent Publications Ltd., London, GB; Class A14, AN 90-365418 XP002085502 & JP 02 263837 A (SANWA KAKO CO) , 26. Oktober 1990
- PATENT ABSTRACTS OF JAPAN vol. 018, no. 122 (C-1173), 28. Februar 1994 & JP 05 310907 A (TEIJIN CHEM LTD), 22. November 1993 in der Anmeldung erwähnt

## Beschreibung

Verfahren zur Herstellung von Lösungen mit Säuregruppen funktionalisierter Polymere durch Mikrowellenbestrahlung

Die vorliegende Erfindung betrifft ein Verfahren zur Herstellung von Lösungen mit Säuregruppen funktionalisierter Polymere durch die Verwendung von Mikrowellenstrahlung, ein Verfahren zur Herstellung der festen, löslichen und unlöslichen Polymere, sowie die Verwendung der Lösungen.

Viele Hochleistungspolymere wie Polyetherketone, teil- oder perfluorierte Polymere oder Polyphenylensulfide zeichnen sich durch ihre Schwerlöslichkeit aus. Während für viele Anwendungen gerade diese Schwerlöslichkeit erwünscht ist, erschwert sie doch die Verarbeitung dieser Polymere ganz erheblich oder macht sie im Extremfall unmöglich.

Die mit Säuregruppen wie beispielsweise -SO₃H, -B(OH)₂, -CO₂H und -PO₃H funktionalisierten Derivate dieser Polymere sind dagegen, abhängig von ihrem Funktionalisierungsgrad, löslich in Lösungsmitteln wie Dimethylformamid, Dimethylsulfoxid, Dimethylacetamid oder N-Methylpyrrolidon. Bei besonders hohen Funktionalisierungsgraden können diese Polymere auch wasserlöslich werden.

Es besteht ein hoher Bedarf an wäßrigen Lösungen solcher mit Säuregruppen funktionalisierter Polymere. Die Vorteile des Verzichts auf organische Lösungsmittel sind etwa Kostensenkung, Gesichtspunkte des Umweltschutzes und arbeitshygienische Gesichtspunkte. Außerdem gilt es, gerade im Bereich der Herstellung von Edelmetall-Katalysatormaterialien, den Einsatz von heteroatomhaltigen, insbesondere chlor-, schwefel- und stickstoffhaltigen Lösungsmitteln zu vermeiden oder wenigstens zu minimieren, da diese als Katalysatorgifte wirken können. Daher sind beispielsweise zur Herstellung von Gasdiffusions-Elektroden für Brennstoffzellen oder Elektrolyseeinheiten wäßrige Zubereitungen protonenleitender Polymere von Interesse.

US-5 453 161 offenbart die Herstellung von Polyimiden, die sich von 3,3',4,4'-Benzophenontetracarbonsäure ableiten, wobei das Reaktionsgemisch mit Mikrowellenstrahlung geheizt wird. Eine Wasserlöslichkeit des Produkts wird nicht berichtet.

JP-05 310 907 offenbart ein Verfahren zur Entfernung von Methylenchlorid aus Polymeren durch Anwendung von Mikrowellenstrahlung. Eine im Vergleich zu klassischen Verfahren des Wärmeeintrags erhöhte Löslichkeit der Polymere nach der Mikrowellenbestrahlung wird nicht berichtet.

Vor dem Hintergrund des Standes der Technik bestand die Aufgabe darin, ein Verfahren zu entwickeln, mit dem Polymere, die Säuregruppen tragen, in einer Form hergestellt werden können, die eine leichtere Löslichkeit in Wasser und organischen Lösungsmitteln bewirkt.

Überraschenderweise wurde gefunden, daß Säuregruppen tragende Polymere unter dem Einfluß von Mikrowellenstrahlung in Wasser und organischen Lösungsmitteln leichter löslich sind als unter dem Einfluß von Druck und Hitze.

Gegenstand der Erfindung ist ein Verfahren zur Herstellung von wäßrigen, wasserhaltigen und nichtwäßrigen Lösungen von mit Säuregruppen funktionalisierten Polymeren, dadurch gekennzeichnet, daß die zur Herstellung der Lösung nötige Wärme durch Mikrowellenstrahlung zugeführt wird.

Dadurch lassen sich auch Polymere in Lösung bringen, die sich selbst bei Erhitzen unter Druck (Temperatur bis 175 °C, Druck bis 4 bar) aufgrund des niedrigen Funktionalisierungsgrades nicht oder nur sehr wenig lösen lassen. Bei den Säuregruppen, mit denen die Polymere funktionalisiert sind, handelt es sich bevorzugt um Sulfonsäure-, Phosphorsäure-, Carboxyl- und/oder Borsäuregruppen.

Als Lösungsmittel kommen vor allem Wasser, Dimethylacetamid, N-Methylpyrrolidon, Dimethylformamid, Dimethylsulfoxid, Alkohole wie z. B. Isopropanol sowie Mischungen aus zwei oder mehreren dieser Stoffe in Frage.

Bevorzugt werden Polyetherketone, Polyphenylensulfide, teil- oder perfluorierte aliphatische Polymere oder Polyethersulfone als Polymere verwendet, insbesondere solche mit einer Ionentauscherkapazität (ion exchange capacity, IEC) zwischen 0,5 und 2 mmol Säurefunktion pro g Polymer. Besonders bevorzugt ist die Verwendung von Polymeren der Formel 1 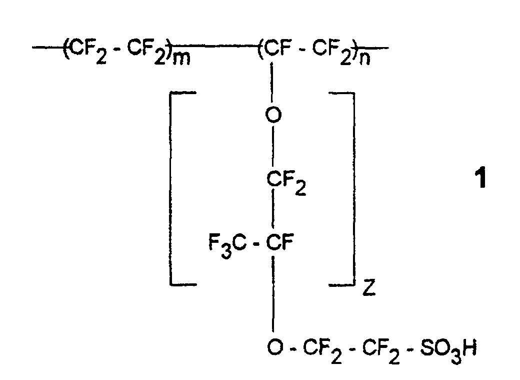 die unter dem Handelsnamen ®Nafion von DuPont vertrieben werden. Die Koeffizienten haben folgende Bedeutung: z≥1, m = 5 bis 14, n = 100.

Im Gegensatz zum Erhitzen ohne Mikrowellenbestrahlung zeigt sich, daß sich vor allem sulfonierte Polyetherketone (PEK), Polyetheretherketone (PEEK) und Polyetheretherketonketone (PEEKK) mit einem wesentlich kleineren Sulfonierungsgrad unter Mikrowellenbestrahlung lösen lassen. Bei der Durchführung des erfindungsgemäßen Verfahrens findet kein erkennbarer Molekulargewichtsabbau statt. Dabei wird ein mindestens vergleichbares, meist sogar wesentlich besseres Lösungsergebnis unter milderen Bedingungen (geringerer Temperatur und Druck) als durch Erhitzen ohne Mikrowellenbestrahlung erzielt. Offenbar ist hier die Mikrowellenstrahlung an sich, und nicht die durch die Mikrowellenstrahlung freigesetzte Hitze für das gute Lösungsverhalten der Polymere unter diesen Bedingen verantwortlich.

Daneben ist es möglich, Polymere, die sich durch Erwärmen auch unter Druck ohne Mikrowellenbestrahlung aufgrund ihres niedrigen Funktionalisierungsgrades nicht oder nur schlecht in einem nicht-wäßrigen Lösungsmittel in Lösung bringen lassen, durch Mikrowellenbestrahlung in N-Methylpyrrolidon, Dimethylacetamid, Dimethylformamid, org. Sulfoxiden wie Sulfolan, oder in Dimethylsulfoxid zu lösen. Damit ist es erstmais möglich, Polymere mit einem kleinen Funktionalisierungsgrad, d.h. mit einem kleinen Anteil an derivatisierten Wiederholungseinheiten, aus Lösung zu verarbeiten. Beispielsweise lassen sich sulfonierte Polyetherketone mit einem Sulfonierungsgrad von ≤ 35% aus NMP-Lösung verarbeiten.

Ein weiterer Gegenstand der Erfindung ist ein Verfahren zur Gewinnung der festen Polymere aus den mikrowellenbestrahlten Lösungen. Diese Polymere sind nach Durchführung des erfindungsgemäßen Verfahrens in dem Lösungsmittel unlöslich, aus dem sie gewonnen wurden.

Die Lösungen der Polymere, beispielsweise in Wasser, können bis zur Trockene eingedampft werden. Das so wiedergewonnene feste Polymer läßt sich in z.B. Wasser durch Erhitzen ohne Mikrowellenbestrahlung in Lösung bringen, oder durch Tempem in einen wasserunlöslichen Zustand bringen, aus dem es wiederum durch Mikrowellenbestrahlung in einen löslichen, z.B. wasserlöslichen Zustand überführt werden kann. Diese überraschende Eigenschaft hat den Vorteil, daß sich die Polymere in einer löslichen Form ohne Lösungsmittel transportieren lassen, dann ohne Mikrowellenbestrahlung gelöst werden können und nach der Verarbeitung und dem Abdampfen des Lösungsmittels durch Tempern in einen unlöslichen Zustand überführt werden können.

Dabei findet während der Mikrowellenbestrahlung kein Abbau des Molekulargewichtes statt, was mit Hilfe der Gel-Permeationschromatographie (GPC) und der thermischen Feldflußfraktionierung (TFFF) gezeigt werden kann. Auch zeigen gelöste und ungelöste Anteile keine unterschiedlichen Molekulargewichte und einen einheitlichen Sulfonierungsgrad. Es findet also während des Lösens keine Extraktion höher sulfonierter oder niedermolekularer Verbindungen statt.

Die nach dem erfindungsgemäßen Verfahren hergestellten Lösungen eignen sich beispielsweise zur Herstellung von Gasdiffusionselektroden, Brennstoffzellen und polymerelektrolytstabilisierten Platin-Nanopartikeln.

### Beispiele

In allen Lösungsversuchen mit Mikrowellenstrahlung wurde ein Mikrowellengerät der Fa. CET, Modell MDS 2000 verwendet. Das Gerät wird aus Sicherheitsgründen nur mit 50 % der Nennleistung, einer Druckbegrenzung von 3,99 bar und einer Temperaturbegrenzung von 175 °C betrieben. Als Probengefäße wurden verschraubbare Teflon-Autoklaven verwendet. Die Probengefäße werden vor Einschalten der Mikrowellenstrahlung mit Stickstoff gespült.

### Beispiel 1: Sulfoniertes PEEK, Lösen in Wasser unter Mikrowellenbestrahlung

47,5 g Wasser und 2,5 g gemahlenes, sulfoniertes PEEK mit einem Sulfonierungsgrad von 51 % werden in einen Mikrowellenautoklaven gefüllt und 4 Minuten mit Stickstoff durchspült. Danach wird das Mikrowellengerät für 5 Minuten eingeschaltet. Nach dem Absinken des Überdruckes auf 0,1 bar wird der Autoklav geöffnet, und die entstandene Lösung bei 4500 Rpm für 30 min. zentrifugiert. Die so erhaltene klare Lösung wird eingedampft. Nach der Bestimmung der Trockenmasse der Lösung sind 98.3 % des Polymers in Lösung gegangen. Die Molmasse des Polymeren wird über GPC (Anlage: Waters, Temperatur 65 °C, Polystyrol-Eichung, Lösungsmittel NMP unter Zusatz von 0,05 % Lithiumchlorid) bestimmt. Dabei ergibt sich sowohl für das Ausgangspolymer, für die Lösung des Polymeren als auch für das ungelöste Polymer das Zahlenmittel des Molekulargewichtes zu 65 000 g/mol +/-3 000 g/mol und das Gewichtsmittel des Molekulargewichtes zu 160 000 g/mol +/- 8 000 g/mol.

### Beispiel 2: Sulfoniertes PEEKK, Lösen in Wasser unter Mikrowellenbestrahlung

47,5 g Wasser und 2,5 g gemahlenes, sulfoniertes PEEK mit einem Sulfonierungsgrad von 65 % werden in Mikrowellenautoklaven gefüllt. Der Autoklav wird verschlossen und 5 Minuten mit Stickstoff gespült. Das Mikrowellengerät wird für 10 min. eingeschaltet. Nach dem Abkühlen wird die Lösung bei 4500 Rpm für 30 min. zentrifugiert. Der wasserlösliche Anteil des Polymeren liegt bei 1,989 g (79 %). Der ungelöste Rückstand beträgt 0,461 g (19 %). Die Molmasse des Polymeren wird über GPC (Anlage: Waters, Temperatur 65 °C, Polystyrol-Eichung, Lösungsmittel NMP unter Zusatz von 0,05 % Lithiumchlorid) bestimmt. Dabei ergibt sich sowohl für das Ausgangspolymer, für die Lösung des Polymeren als auch für das ungelöste Polymer das Zahlenmittel des Molekulargewichtes zu 55 000 g/mol +/-3 000 g/mol und das Gewichtsmittel des Molekulargewichtes zu 130 000 g/mol +/- 8 000 g/mol.

### Vergleichsbeispiel 3: Lösen von sulfoniertem PEEKK in Wasser ohne Mikrowellenbestrahlung

1 g sulfoniertes, gemahlenes PEEKK mit einem Sulfonierungsgrad von 65 % wird zusammen mit 19 g destilliertem Wasser in einem Glasautoklaven vorgelegt. Man erhitzt mit einem Ölbad für 40 min. auf eine Temperatur von 165 °C (Innendruck 3,5 bar) und läßt danach abkühlen. Dabei entsteht ein bräunliches Gel. Die überstehende, leicht trübe Lösung enthielt nur ca. 0,05 g, entsprechend 5 % Polymer.

### Beispiel 4: Sulfoniertes PEEK, Lösen in N-Methylpyrrolidon mit Mikrowellenbestrahlung

3 g sulfoniertes, gemahlenes PEEK mit einem Sulfonierungsgrad von 33 % werden zusammen mit 57 g N-Methylpyrrolidon in einen Mikrowellenautoklaven gefüllt. Der Mikrowellenautoklav wird 5 min. mit Stickstoff durchspült. Dann wird das Mikrowellengerät für 5 Minuten eingeschaltet. Es ergibt sich nach dem Abkühlen eine klare, hellgelbe Lösung mit einem bräunlichen Bodensatz. Der lösliche Anteil beträgt 84% (2,53 g).

## Patentansprüche

1. Verfahren zur Herstellung von wäßrigen, wasserhaltigen und nichtwäßrigen Lösungen von mit Säuregruppen funktionalisierten Polymeren, **dadurch gekennzeichnet, daß** die zur Herstellung der Lösung nötige Wärme durch Mikrowellenstrahlung zugeführt wird.

2. Verfahren nach Anspruch 1, **dadurch gekennzeichnet, daß** es sich bei den Säuregruppen um Sulfonsäure-, Phosphorsäure-, Carboxyl- und/oder Borsäuregruppen handelt.

3. Verfahren nach Anspruch 1 und/oder 2, **dadurch gekennzeichnet, daß** es sich bei dem Lösungsmittel um Wasser, Dimethylacetamid, N-Methylpyrrolidon, Dimethylformamid, Dimethylsulfoxid, einen Alkohol oder um eine Mischung aus zwei oder mehreren dieser Stoffe handelt.

4. Verfahren nach einem oder mehreren der Ansprüche 1 bis 3, **dadurch gekennzeichnet, daß** es sich bei dem Polymer um ein Polyetherketon, Polyphenylensulfid, Polyethersulfon oder um eine Verbindung der Formel 1 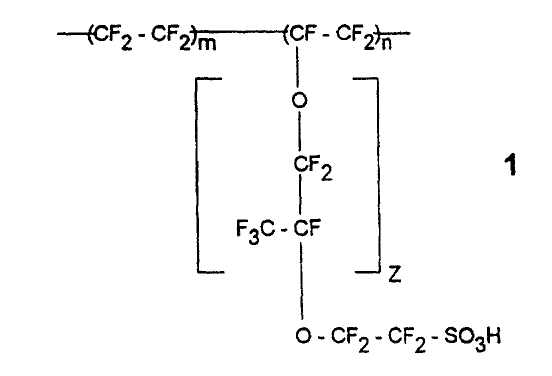 handelt, worin Z≥1, m = 5 bis 14 und n = 100 sind.

5. Verfahren nach einem oder mehreren der Ansprüche 1 bis 4, **dadurch gekennzeichnet, daß** das Polymer einen IEC (Ionenaustausher kapazität zwischen 0,5 und 2 mmol Säurefunktion pro g Polymer hat.

6. Verfahren zur Herstellung eines polymeren Feststoffs aus einer Lösung hergestellt nach einem oder mehreren der Ansprüche 1 bis 5 durch Einengen der Lösung bis zur Trockene, **dadurch gekennzeichnet, daß** er in dem Lösungsmittel löslich ist, aus dem er gewonnen wurde

7. Verfahren zur Herstellung eines polymeren Feststoffs nach Anspruch 6, **dadurch gekennzeichnet, daß** er nach dem Einengen der Lösung durch Tempern unlöslich in dem Lösungsmittel wird, mit dem die Lösung durch Mikrowellenbestrahlung hergestellt wurde.

8. Polymerer Feststoff, herstellbar nach Anspruch 6 oder 7.

9. Verwendung von Lösungen nach einem oder mehreren der Ansprüche 1 bis 5 zur Herstellung von Gasdiffusionselektroden, Brennstoffzellen und polymerelektrolytstabilisierten Platin-Nanopartikeln.

## Claims

1. A process for preparing aqueous, hydrous or anhydrous solutions of polymers functionalized with acid groups, which comprises using microwave radiation to supply the heat required to prepare the solution.

2. The process as claimed in claim 1, wherein the acid groups are sulfonic acid, phosphoric acid, carboxyl and/or boric acid groups.

3. The process as claimed in claim 1 and/or 2, wherein the solvent is water, dimethylacetamide, N-methylpyrrolidone, dimethylformamide, dimethyl sulfoxide, an alcohol, or a mixture of two or more of these substances.

4. The process as claimed in one or more of claims 1 to 3, wherein the polymer is a polyether ketone, polyphenylene sulfide, polyether sulfone or a compound of the formula 1 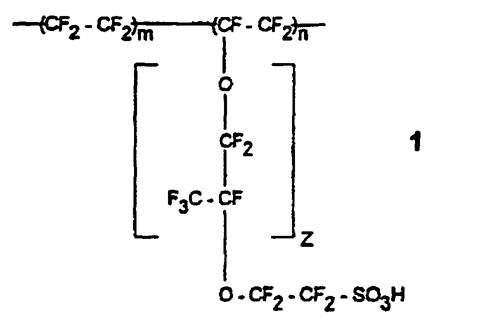 where Z≥1, m = from 5 to 14 and n = 100.

5. The process as claimed in one or more of claims 1 to 4, wherein the polymer has an IEC (ion-exchange capacity) of from 0.5 to 2 mmol of acid functionality per g of polymer.

6. A process for preparing a polymeric solid from a solution prepared as claimed in one or more of claims 1 to 5, by evaporating the solution to dryness, wherein the solid is soluble in the solvent from which it was obtained.

7. A process for preparing a polymeric solid as claimed in claim 6, wherein, after the solution has been concentrated, annealing of the solid makes it insoluble in the solvent used with microwave irradiation to prepare the solution.

8. A polymeric solid which can be prepared as claimed in claim 6 or 7.

9. The use of solutions as claimed in one or more of claims 1 to 5 for preparing gas diffusion electrodes, fuel cells and polymer-electrolyte-stabilized platinum nanoparticles.

## Revendications

1. Procédé pour la fabrication de solutions aqueuses, à base aqueuse et non aqueuse, de polymères fonctionnalisés avec des groupes acides, **caractérisé en ce que** la chaleur nécessaire à la fabrication de la solution est introduite au moyen de rayonnement micro-ondes.

2. Procédé selon la revendication 1, **caractérisé en ce qu'**il s'agit pour les groupes acides des groupes acide sulfonique, acide phosphorique, acide carboxylique et/ou acide borique.

3. Procédé selon la revendication 1 et/ou 2, **caractérisé en ce qu'**il s'agit pour le solvant d'eau, de diméthylacétamide, de N-méthylpyrrolidone, de diméthylformamide, de diméthylsulfoxyde, d'un alcool ou d'un mélange de deux ou plusieurs de ces substances.

4. Procédé selon une ou plusieurs des revendications 1 à 3, **caractérisé en ce qu'**il s'agit pour le polymère d'une polyéthercétone, d'un polysulfure de phénylène, d'une polyéthersulfone ou d'un composé de formule 1 : 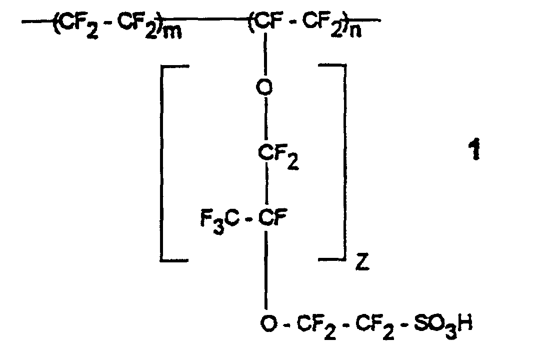 dans laquelle z ≥ 1, m = 5 à 14, n = 100.

5. Procédé selon une ou plusieurs des revendications 1 à 4, **caractérisé en ce que** le polymère a une capacité d'échange d'ions IEC comprise entre 0,5 et 2 mmoles de fonction acide par g de polymère.

6. Procédé pour la fabrication d'un solide polymère préparé à partir d'une solution selon une ou plusieurs des revendications 1 à 5 par concentration de la solution à sec, **caractérisé en ce qu'**il est soluble dans le solvant, à partir duquel il a été obtenu.

7. Procédé pour la fabrication d'un solide polymère selon la revendication 6, **caractérisé en ce que**, après la concentration de la solution par étuvage, il devient insoluble dans le solvant, avec lequel la solution a été préparée au moyen de rayonnement micro-ondes.

8. Solide polymère, que l'on peut fabriquer selon la revendication 6 ou 7.

9. Utilisation de solutions selon une ou plusieurs des revendications 1 à 5 pour la préparation d'électrodes à diffusion gazeuse, de piles à combustibles et de nanoparticules de platine stabilisées dans un électrolyte polymère.
